# EUROPÄISCHE PATENTSCHRIFT

(11) **EP 2 025 493 B1**
(45) Veröffentlichungstag und Bekanntmachung des Hinweises auf die Patenterteilung: **13.11.2013**
(21) Anmeldenummer: 08007629.2
(22) Anmeldetag: 18.04.2008
(51) Int. Cl.: B29C 45/42, B25J 9/10, B65G 47/90

(54) **Handhabungseinrichtung sowie Spritzgussvorrichtung mit Handhabungseinrichtung**
Handling device and injection moulding device with handling device
Dispositif de manipulation ainsi que dispositif de moulage par injection doté d'un dispositif de manipulation

(30) Priorität: 30.04.2007 DE 102007020653
(43) Veröffentlichungstag der Anmeldung: 18.02.2009
(73) Patentinhaber: Waldorf Technik GmbH & Co. KG, 78234 Engen (DE)
(72) Erfinder: Fuhrmann, Ralf, 78234 Engen (DE)
(74) Vertreter: Wagner, Kilian

(56) Entgegenhaltungen:
- EP-A- 0 197 737
- EP-A- 0 624 448
- EP-A- 0 779 141
- EP-A- 1 092 524
- DE-A1- 19 645 463
- DE-C1- 3 631 314
- DE-U1-202004 017 526
- JP-A- 60 255 252
- US-A- 4 212 622

## Beschreibung

Die Erfindung betrifft eine Handhabungseinrichtung gemäß dem Oberbegriff des Anspruchs 1. Ferner betrifft die Erfindung eine Spritzgussvorrichtung (Spritzgussanordnung) zum Herstellen von Spritzgussteilen, insbesondere zum Herstellen von Kunststoffbehältern, gemäß Anspruch 10.

Derartige Handhabungseinrichtungen finden meist Einsatz im Bereich der industriellen Fertigungs- und Handhabungstechnik. Insbesondere finden derartige Handhabungseinrichtungen Einsatz im Bereich der Spritzgusstechnik, meistens im Zusammenhang mit der Entformung von Spritzgussformen sowie dem automatischen Zuführen von Verpackungsetiketten in einem IML (In-Mold-Labelling) Fertigungsprozess zum Herstellen von mit den Etiketten zu versehenden Verpackungsbehältern. Dabei muss eine eine Funktionseinheit tragende Trägereinheit der Handhabungseinrichtung zwischen zwei entlang einer X-Achse verstellbaren Teilformen einer Spritzgussform verstellt werden, insbesondere zur Zuführung von Verpackungsetiketten in eine erste Teilform und zur Entformung der zweiten Teilform in einem gemeinsamen Arbeitsschritt.

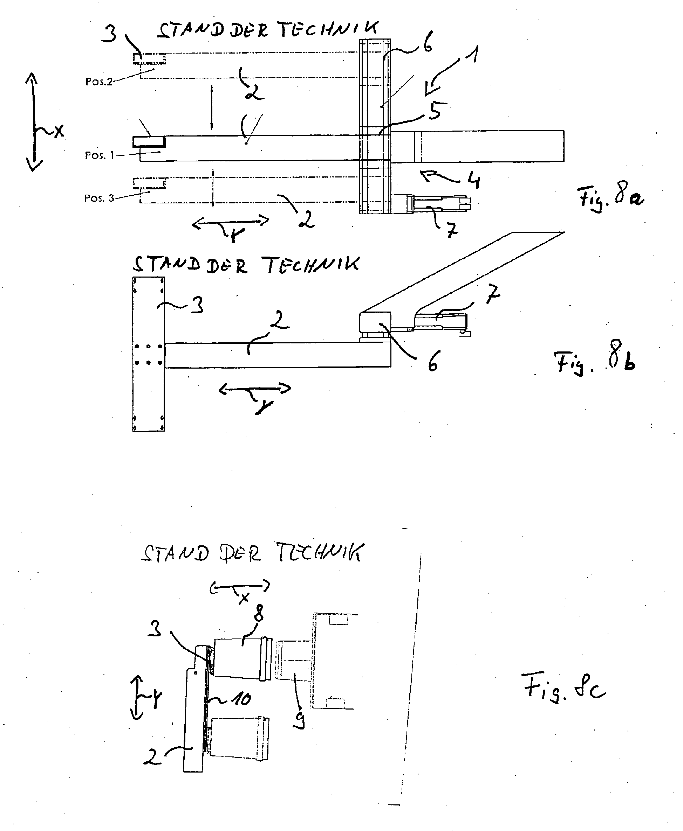

In den Fig. 8a und 8b ist eine Handhabungseinrichtung nach dem hausintern bekannten Stand der Technik gezeigt. Die bekannte Handhabungseinrichtung 1 umfasst eine Trägereinheit 2 für eine Funktionseinheit 3. Die Funktionseinheit 3 ist beispielsweise mit nicht gezeigten Saugmitteln ausgestattet, um ein Spritzgussteil aus einer Teilform einer Spritz gussform entformen zu können. Zum Verstellen der Trägereinheit 2 mit Funktionseinheit 3 sind Verstellmittel 4 vorgesehen. Mittels der Verstellmittel 4 ist die Trägereinheit 2 zwischen zwei auf einer X-Achse liegenden Endpositionen (Pos. 2 und Pos. 3) verstellbar. Ferner ist die Trägereinheit 2 mittels der Verstellmittel 4 quer zur X-Achse entlang einer Y-Achse verstellbar, insbesondere um die Funktionseinheit 3 in den Bereich zwischen zwei nicht gezeigte, auf der X-Achse positionierte Teilformen einer Spritzgussform hinein und aus diesem Bereich wieder heraus zu bewegen. Zur Realisierung der Verstellbewegung der Trägereinheit 2 zwischen den Endpositionen ist ein Führungsschlitten 5 vorgesehen, der translatorisch entlang eines Trägers 6 verstellbar ist. Die Verstellbewegung der Trägereinheit resultiert also aus einer rein translatorischen Bewegung des Schlittens 5 entlang des Trägers 6. Der Träger 6 wiederum ist mittels eines weiteren Führungsschlittens 5 entlang der Y-Achse verstellbar. Nachteilig bei der bekannten Konstruktion ist, dass die Störkontur der Verstellmittel 4 groß ist, was insbesondere nachteilig ist für den Einsatz der Handhabungseinrichtung in Spritzgussvorrichtungen, in denen der zur Verfügung stehende Bauraum begrenzt ist. Des Weiteren führt das Vorsehen des langgestreckten Trägers 6 zu einer statischen Asymmetrie im Grundaufbau. Weiterhin ist von Nachteil, dass, wenn die Trägereinheit 2 in die in der Zeichnungsebene obere Endposition (Pos. 2) ausgefahren ist, ein großes Drehmoment auf die Lagerung des Trägers 5 wirkt. Ferner muss der Träger 6 große Torsionskräfte aufnehmen. Aus diesem Grund muss der Träger 6 entsprechend massiv ausgelegt werden, was jedoch das Grundgewicht der Verstellmittel 4 erhöht. Dies wiederum führt zu dieser Notwendigkeit Antriebe mit einer großen Leistungsaufnahme vorzusehen.

In Fig. 8c ist eine weitere Handhabungseinrichtung zum hausinternen Stand der Technik gezeigt. Zu erkennen ist eine Trägereinheit 2, die eine als Entnahmeeinheit ausgebildete Funktionseinheit 3 trägt, mit deren Hilfe ein fertiges Spritzgussteil 8 von einer Teilform 9 entformbar ist. Hierzu wird zunächst die Trägereinheit 2 entlang der Y-Achse verstellt, so dass die Funktionseinheit 3 parallel zu der Teilform 9 ausgerichtet ist. Nach Verstellen entlang der X-Achse auf die Teilform 9 zu, kann die Funktionseinheit 3 das Spritzgussteil 8 ansaugen. Daraufhin wird die Trägereinheit 2 in die entgegengesetzte Richtung entlang der X-Achse in die gezeigte obere Position verfahren, woraufhin das Verstellen des Spritzgussteils 8 mittels eines an der Trägereinheit 2 gehaltenen Schlittens 10 in die in der Zeichnungsebene untere Position erfolgt. Das Verfahren in diese in der Zeichnungsebene untere Position ist notwendig, um ein Herausverfahren der Trägereinheit 2 aus einem Bereich zwischen der gezeigten Teilform 9 und einer weiteren, nicht gezeigten, der Teilform 9 gegenüberliegenden Teilform zu ermöglichen, in die mittels einer weiteren, nicht gezeigten, an der Trägereinheit 2 fixierten, der Funktionseinheit 3 gegenüberliegenden, als Einlegeeinheit ausgebildeten Funktionseinheit ein Verpackungsetikett einlegbar ist.

Aus der US 4,212,622 A ist eine Handhabungseinrichtung bekannt, mit welcher eine Trägereinheit zwischen zwei Teilformen entlang einer Achse verstellbar ist. Diese Verstellachse ist jedoch winklig zu einer gedachten X-Achse angeordnet, die die Teilformen orthogonal verbindet.

Die JP 60 255252 A beschreibt eine Handhabungseinrichtung mit zwei Kulissen, wobei die Länge der Kulissen gemessen in Richtung des zu erzielenden Hubes einer Trägereinheit die gleiche Erstreckung hat wie der zu erzielende Hub. Die bekannte Handhabungseinrichtung baut vergleichsweise groß.

Der Erfindung liegt die Aufgabe zugrunde, eine kleiner bauende Handhabungseinrichtung vorzuschlagen. Ferner soll eine Handhabungseinrichtung vorgeschlagen werden, die das Durchführen einer Umsetzbewegung in einer verkürzten Zeit ermöglicht. Daneben soll eine entsprechend verbesserte Spritzgussvorrichtung bereitgestellt werden. Hinsichtlich der Handhabungseinrichtung wird die Aufgabe mit den Merkmalen des Anspruchs 1 gelöst. Hinsichtlich der Spritzgussvorrichtung wird die Aufgabe mit den Merkmalen des Anspruchs 10 gelöst. Vorteilhafte Weiterbildungen der Erfindung sind in den Unteransprüchen angegeben. In den Rahmen der Erfindung fallen auch sämtliche Kombinationen aus zumindest zwei von der in der Beschreibung, den Ansprüchen und/oder den Figuren angegebenen Merkmalen.

Der Erfindung liegt der Gedanke zugrunde, die Verstellmittel derart auszubilden, dass die Verstellbewegung der Trägereinheit zwischen ihren beiden auf der X-Achse liegenden Endpositionen nicht aus einer reinen translatorischen Bewegung resultiert, was das Vorsehen eines massiven, langgestreckten Trägers mit einer großen Störkontur notwendig machen würde, sondern die Verstellmittel zum Verstellen der Trägereinheit derart auszubilden, dass die Verstellbewegung der Trägereinheit zwischen den beiden, insbesondere zwischen den entlang einer X-Achse relativ zueinander verstellbaren Teilformen einer mehrteiligen Spritzgussform gelegenen, Endpositionen aus einer kombinierten, insbesondere gekoppelten rotatorischen und translatorischen Bewegung resultiert. Hierdurch ist es möglich, auf den im Stand der Technik notwendigen, massiven und langgestreckten Träger zu verzichten. Die Verstellmittel können weniger massiv ausgeführt werden, was insgesamt zu einer Gewichtsreduzierung der gesamten Handhabungseinrichtung führt. Dies wiederum hat den Vorteil, dass leistungsschwächere Antriebe zum Einsatz kommen können und gleichzeitig die Umsetzbewegungen in einer erhöhten Geschwindigkeit ausgeführt werden können, da insgesamt eine geringere Masse beschleunigt werden muss. Die Verstellmittel sind derart ausgebildet, dass die aus der kombinierten rotatorischen und translatorischen Bewegung resultierende Verstellbewegung der Trägereinheit zwischen den Endpositionen eine rein translatorische Bewegung entlang der X-Achse ist. Hierdurch werden störende Fliehkrafteinflüsse auf an der Trägereinheit gehaltene Funktionseinheiten bzw. auf von den Funktionseinheiten getragene Elemente, wie fertige Spritzgussteile und/oder Etiketten, mit Vorteil vermieden, die auftreten würden, falls die Trägereinheit auf einer gekrümmten Bahn zwischen den Endpositionen verstellt würde.

Das Verstellen der Trägereinheit mittels der Verstellmittel erfolgt derart, dass eine Aufnahmefläche der Trägereinheit, insbesondere zur Aufnahme einer Funktionseinheit, in den Endpositionen, in sich parallel bleibt, d.h. in den Endpositionen parallel zu einer gedachten Ebene ist. Dabei bleibt die Trägereinheit auch während der gesamten Verstellbewegung zwischen den Endpositionen in sich parallel, wird also relativ zu gedachten Ebene nicht verschwenkt. Mit Vorteil handelt es sich bei der gedachten Ebene, zu der eine Aufnahmefläche der Trägereinheit in den Endpositionen parallel ist und vorzugsweise auch während der gesamten Verstellbewegung parallel bleibt, um eine von der Y-Achse und der Z-Achse aufgespannte Ebene, also eine Ebene, auf der die X-Achse senkrecht steht.

Zur Realisierung einer gekoppelten rotatorischen und translatorischen Bewegung der Trägereinheit ist erfindungsgemäß vorgesehen, dass die Verstellmittel einen Parallelogrammlenkermechanismus und eine Führungskulisse umfassen. Mittels des Parallelogrammlenkermechanismus wird dabei die rotatorische Bewegungskomponente der Trägereinheit realisiert, wobei die Führungskulisse für die Kopplung der rotatorischen Bewegung mit einer translatorischen Bewegung entlang der Y-Achse verantwortlich ist. Bevorzugt ist die Führungskulisse derart ausgeformt, dass die Trägereinheit zwischen den beiden Endpunkten eine rein translatorische Bewegung vollführt.

Erfindungsgemäß umfasst der Parallelogrammlenkermechanismus zwei Lenker, die an einem entlang der Y-Achse verstellbaren Verstellschlitten angelenkt sind, wobei einer der Lenker in der Führungskulisse geführt ist. Diese Anordnung der Lenker führt dazu, dass ein Verschwenken eines der Lenker eine translatorische Verstellbewegung des Verstellschlittens mit einem der Lenker entlang der Y-Achse zur Folge hat. Bei entsprechender Ausformung der Führungskulisse kann hierdurch auf elegante Weise aus einer kombinierten rotatorischen und translatorischen Bewegung (Parallelogrammlenkermechanismus und Verstellschlitten) eine rein translatorische Bewegung der gelenkig mit dem Parallelogrammlenkermechanismus verbundenen Trägereinheit zwischen den Endpositionen realisiert werden.

Von Vorteil ist eine Ausführungsform, bei der die Führungskulisse, relativ zu der der Verstellschlitten entlang der Y-Achse verstellbar ist, an einem Auslegerarm der Handhabungseinrichtung fixiert ist. Vorzugsweise ist dieser Auslegerarm entlang der Y-Achse verstellbar und ermöglicht so ein Verstellen der Trägereinheit, insbesondere zusammen mit der mindestens einer Funktionseinheit, in den Bereich zwischen zwei Teilformen einer Spritzgussform hinein und entlang der Y-Achse translatorisch wieder aus diesem Zwischenbereich heraus. Vorzugsweise ist zum Verstellen des Auslegerarms entlang der Y-Achse ein pneumatischer oder servoelektrischer Antrieb vorgesehen.

Bevorzugt erfolgt das Verschwenken des Parallelogrammlenkermechanismus und damit das gekoppelte translatorische Verstellen des Verstellschlittens entlang der Y-Achse nicht mittels eines pneumatischen oder hydraulischen, sondern mittels eines elektromotorischen Antriebs, insbesondere mittels eines Stellmotors. Dieser ist vorzugsweise auf dem Schlitten angeordnet und zusammen mit diesem entlang der Y-Achse verstellbar.

Mit Vorteil trägt die Trägereinheit mindestens eine, vorzugsweise zwei Funktionseinheiten. Jede Funktionseinheit kann dabei mehrere Unterfunktionseinheiten umfassen, insbesondere zum gleichzeitigen Bedienen mehrerer, vorzugsweise übereinander angeordneter Teilformen einer Spritzgussvorrichtung. Eine rein translatorische Verstellbewegung der Trägereinheit mit den Funktionseinheiten ermöglicht eine exakte Ausrichtung der Funktionseinheiten zu den entlang einer X-Achse verstellbaren Teilformen einer Spritzgussvorrichtung.

Dabei ist es von Vorteil, wenn eine von der Trägereinheit getragene Funktionseinheit als mindestens eine Entformeinheit, insbesondere mit Saugmitteln, zum Entformen des fertigen Spritzgussteils von einer der auseinander verstellten Teilformen ausgebildet ist.

In Weiterbildung der Erfindung ist mit Vorteil vorgesehen, dass eine der an der Trägereinheit gehaltenen Funktionseinheiten als mindestens eine Folieneinlegeeinheit ausgebildet ist, die zum Einlegen einer Folie in eine der Teilformen dient. Vorzugsweise trägt die Trägereinheit sowohl eine Entformeinheit als auch eine Folieneinheit, wobei die beiden Funktionseinheiten vorzugsweise auf zwei einander gegenüberliegenden Seiten der Trägereinheit angeordnet sind. Dabei ist es denkbar, dass die Trägereinheit ein eigenständiges Bauteil ist, oder einstückig mit einer Funktionseinheit oder, bei dem Vorsehen von zwei Funktionseinheiten, einstückig mit den beiden Funktionseinheiten ausgebildet ist.

Von besonderem Vorteil ist es, wenn die Funktionseinheit nicht starr an der Trägereinheit angeordnet ist, sondern wenn diese relativ zu der Trägereinheit verschwenkbar angetrieben ist. Vorzugweise ist die Funktionseinheit um eine vertikale Z-Achse verschwenkbar, die senkrecht sowohl zur X-Achse als auch zur Y-Achse verläuft. Dabei ist es von besonderem Vorteil, wenn die Funktionseinheit zumindest näherungsweise um 90° verschwenkbar angetrieben ist. Diese Ausführungsform ermöglicht ein Verschwenken von Spritzgussteilen nach deren Entformung von einer Teilform. Diese Ausführungsform ist insbesondere für Anwendungsfälle interessant, in denen das fertige Spritzgussteil, insbesondere ein Behälter, in der Spritzgussform eine größere Erstreckung entlang der X-Achse als entlang der Y-Achse aufweist. Durch das Verschwenken, insbesondere um 90°, erhält das Spritzgussteil eine kürzere Erstreckung entlang der X-Achse als entlang der Y-Achse, wodurch die Bewegungsfreiheit der Trägereinheit entlang der X-Achse vergrößert wird und dadurch die Teilformen in einem geringeren Abstand zueinander aufgestellt werden können.

Besonders bevorzugt ist eine Ausführungsform, bei der die Funktionseinheit nicht ausschließlich relativ zu der Trägereinheit verschwenkbar, sondern, insbesondere gleichzeitig, bevorzugt gekoppelt, auch translatorisch, insbesondere entlang der Y-Achse, verstellbar ist. Hierdurch kann das fertige Spritzgussteil in einer eleganten Weise mit hoher Geschwindigkeit aus dem Bereich zwischen den Teilformen verfahren und dabei gleichzeitig noch, insbesondere um die Z-Achse, verschwenkt werden. Bevorzugt ist die Funktionseinheit, insbesondere ein Flächenabschnitt der Funktionseinheit, in der ersten Position parallel zu einer von der Y-Achse und der Z-Achse aufgespannten Ebene ausgerichtet und in der zweiten Position parallel zu einer von der X-Achse und der Z-Achse aufgespannten Ebene.

Zur Realisierung der translatorischen Bewegungskomponente der Funktionseinheit ist in Ausgestaltung der Erfindung vorgesehen, dass die Funktionseinheit auf einem Schlitten angeordnet ist, der relativ zu der Trägereinheit, insbesondere entlang der Y-Achse, translatorisch verstellbar ist. Vorzugsweise ist hierzu an der Trägereinheit eine entsprechende Führungsbahn für den Schlitten vorgesehen.

Zur Realisierung einer gekoppelten translatorischen und rotatorischen Bewegung der Funktionseinheit ist in Ausgestaltung der Erfindung vorgesehen, dass die Funktionseinheit gelenkig mit einem Koppellenker verbunden ist, der wiederum an der Trägereinheit angelenkt ist und zwar an einer Position, relativ zu der der Schlitten verstellbar ist. Wird nun der Schlitten translatorisch oder die Funktionseinheit rotatorisch angetrieben, resultiert über die Kopplung in jedem Fall eine kombinierte rotatorische und translatorische Bewegung der Funktionseinheit. In Ausgestaltung der Erfindung ist mit Vorteil vorgesehen, dass zum translatorischen Verstellen des Schlittens ein pneumatischer oder hydraulischer Antrieb vorgesehen ist, der mit Vorteil an der Trägereinheit gehalten ist.

Zum Verstellen des den Parallelogrammlenkermechanismus tragenden Auslegerarms entlang der Y-Achse ist mit Vorteil ein servoelektrischer oder pneumatischer Antrieb vorgesehen.

Besonders bevorzugt ist eine Handhabungseinrichtung, bei der der elektromotorische Antrieb an dem Verstellschlitten angeordnet ist.

Besonders bevorzugt ist eine Handhabungseinrichtung, bei der die Trägereinheit mindestens eine Funktionseinheit trägt.

Besonders bevorzugt ist eine Handhabungseinrichtung, bei der die Trägereinheit eine als Entformeinheit, insbesondere mit Saugmitteln, zum Entformen des herstellten Spritzgussteils von einer der Teilformen, ausgebildete Funktionseinheit trägt.

Besonders bevorzugt ist eine Handhabungseinrichtung, bei der die Trägereinheit eine als Folieneinlegeeinheit zum Einlegen einer Folie in eine der Teilformen, ausgebildete Funktionseinheit trägt.

Besonders bevorzugt ist eine Handhabungseinrichtung, bei der die Funktionseinheit verschwenkbar an der Trägereinheit, vorzugsweise verschwenkbar um eine entlang einer senkrecht zur X- sowie senkrecht zur Y-Achse verlaufende vertikale Z-Achse, insbesondere um 90° verschwenkbar, angetrieben angeordnet ist.

Besonders bevorzugt ist eine Handhabungseinrichtung, bei der die Funktionseinheit zwischen einer ersten Position (Pos. A) und einer zweiten Position (Pos. B) in einer kombinierten rotatorischen und translatorischen Bewegung verstellbar ist.

Besonders bevorzugt ist eine Handhabungseinrichtung, bei der die Funktionseinheit verschwenkbar auf einem an der Trägereinheit angeordneten Schlitten angeordnet ist.

Besonders bevorzugt ist eine Handhabungseinrichtung, bei der die Funktionseinheit oder der Schlitten gelenkig mit einem an der Trägereinheit angelenkten Koppellenker verbunden ist, derart, dass aus einer translatorischen Verstellbewegung des Schlittens, insbesondere entlang der Y-Achse, die Verschwenkbewegung der Funktionseinheit relativ zu der Trägereinheit resultiert.

Besonders bevorzugt ist eine Handhabungseinrichtung, bei der ein Linerantrieb, insbesondere ein pneumatischer oder hydraulischer Antrieb, zum translatorischen Verstellen des Schlittens, insbesondere an der Trägereinheit, vorgesehen ist.

Besonders bevorzugt ist eine Handhabungseinrichtung, bei der ein hydraulischer oder pneumatischer Antrieb zum translatorischen des Auslegerarms entlang der Y-Achse vorgesehen ist.

Gegenstand der Erfindung ist auch eine Spritzgussvorrichtung zum Herstellen von Spritzgussteilen, insbesondere zum Herstellen von Kunststoffbehältern, vorzugsweise zum Herstellen von Kunststoffeimern. Die Spritzgussvorrichtung umfasst eine mehrteilige Spritzgussform, wobei die Spritzgussform eine erste und eine zweite Teilform umfasst, die relativ zueinander entlang einer X-Achse translatorisch verstellbar sind. Ferner umfasst die Spritzgussvorrichtung eine zuvor beschriebene Handhabungseinrichtung, die insbesondere derart ausgebildet ist, dass in einem Arbeitsschritt sowohl ein Spritzgussteil von einer der Teilformen entformbar ist als auch ein Etikett in die andere Teilform einlegbar ist. Bevorzugt trägt die Trägereinheit der Handhabungseinrichtung hierzu zwei, insbesondere auf gegenüberliegenden Seiten der Handhabungseinrichtung angeordnete Funktionseinheiten, von denen eine als Entformeinheit und die andere als Einlegeeinheit ausgebildet ist.

Bevorzugt ist eine Ausführungsform, bei der nur eine der beiden Teilformen translatorisch angetrieben ist und die andere Teilform ortsfest angeordnet ist. Selbstverständlich ist es auch denkbar, beide Teilformen relativ zueinander translatorisch entlang der X-Achse anzutreiben. Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1a: eine Ansicht einer Handhabungseinrichtung von unten,
- Fig. 1b: eine Seitenansicht der Handhabungseinrichtung gemäß Fig. 1a,
- Fig. 1c: ein Detail einer Handhabungseinrichtung mit einer kombiniert rotatorisch und translatorisch relativ zu einer Trägereinheit verstellbaren Funktionseinheit,
- Fig. 1d: ein Ausschnitt der Handhabungseinrichtung gemäß Fig. 1c in einer perspektivischen Darstellung in einer ersten Position,
- Fig. 1f: die Handhabungseinrichtung gemäß den Fig. 1c und 1d, bei der die Funktionseinheit sich gegenüber der in Fig. 1d gezeigten Position in einer um 90° verschwenkten zweiten Position befindet,
- Fig. 2: eine perspektivische Ansicht einer Handhabungseinrichtung mit einer relativ zu der Trägereinheit rotatorisch und translatorisch verstellbaren Funktionseinheit sowie einer starr an der Trägereinheit festgelegten Funktionseinheit,
- Fig. 3a bis Fig. 3f: unterschiedliche Ansichten und Detailzeichnungen einer Handhabungseinrichtung mit in einem Bereich zwischen zwei Teilformen einer Spritzgussvorrichtung eingefahrener Trägereinheit,
- Fig. 4a bis Fig. 4f: unterschiedliche Ansichten und Detailansichten der Handhabungseinrichtung während der Entformung eines Spritzgussteils von einer der Teilformen der Spritzgussvorrichtung,
- Fig. 5a bis Fig. 5f: unterschiedliche Ansichten und Detailzeichnungen der Handhabungseinrichtung während des Einlegens eines als Etikett ausgebildeten Substrates in eine der Teilformen der Spritzgussvorrichtung,
- Fig. 6a bis Fig. 6f: unterschiedliche Ansichten und Detailzeichnungen der Handhabungseinrichtung während des Einlegens des Substrates in eine der Teilformen der Spritzgussvorrichtung, wobei das Spritzgussteil translatorisch und rotatorisch relativ zu der Trägereinheit der Handhabungseinrichtung verstellt ist,
- Fig. 7a bis Fig. 7f: unterschiedliche Ansichten und Detailzeichnungen der Handhabungseinrichtung unmittelbar vor dem Ausfahren der Trägereinheit aus dem Bereich zwischen den Teilformen der Spritzgussvorrichtung entlang einer Y-Achse heraus und
- Fig. 8a bis Fig. 8c: Ausführungsformen nach dem hausinternen Stand der Technik.

In den Figuren sind gleiche Bauteile und Bauteile mit der gleichen Funktion mit den gleichen Bezugszeichen gekennzeichnet.

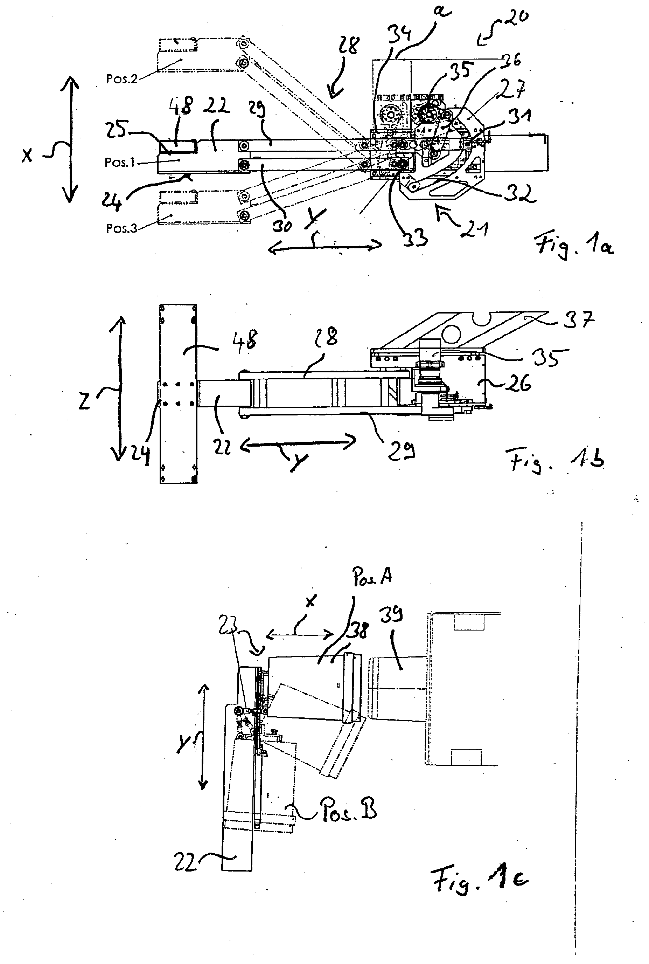

In den Fig. 1a und 1b ist eine Handhabungsvorrichtung 20 gezeigt. Die Handhabungsvorrichtung 20 umfasst Verstellmittel 21 zum Verstellen einer Trägereinheit 22 zwischen zwei auf einer X-Achse liegenden Endpositionen (Pos. 2 und Pos. 3). Die Trägereinheit 22 trägt in dem gezeigten Ausführungsbeispiel eine als Einlegeeinrichtung ausgebildete Funktionseinheit 48 zum Einlegen einer als Etikett ausgebildeten Struktur in eine nicht gezeigte Teilform einer Spritzgussmaschine. Die Trägereinheit 22 umfasst zwei parallel Aufnahmeflächen 24, 25, die sich entlang der Y-Achse und einer in Fig. 1b eingezeichneten Z-Achse erstrecken. Wie aus Fig. 1a deutlich wird, sind die Aufnahmeflächen 24, 25 in beiden Endpositionen (Pos. 2 und Pos. 3) sowie in einer Zwischenposition (Pos. 1) parallel zu einer von der Y-Achse und der Z-Achse aufgespannten, gedachten Ebene ausgerichtet. Die Verstellbewegung zwischen den beiden Endpositionen (Pos. 2 und Pos. 3) erfolgt mittels der später noch zu erläuternden Verstellmittel 21 derart, dass die Aufnahmeflächen 24, 25 während dieser reinen translatorischen Bewegung der Trägereinheit 22 parallel zu der von der Y-Achse und der Z-Achse aufgespannten Ebene ausgerichtet bleiben.

Die Verstellmittel 21 umfassen eine an einem sich entlang der Y-Achse erstreckenden Auslegerarm 26 festgelegte Führungskulisse 27 sowie einen Parallelogrammlenkermechanismus 28 mit einem ersten Lenker 29 und einem zweiten Lenker 30. Beide Lenker 29, 30 sind an der Trägereinheit 22 angelenkt und fluchten in der Zwischenposition (Pos. 1) mit dem Auslegerarm 26. In diese Zwischenposition (Pos. 1) hinein und aus dieser Zwischenposition (Pos. 1) heraus ist die Trägereinheit 22 durch translatorisches Verstellen des Auslegerarms 26 entlang der Y-Ache mit einem nicht gezeigten servoelektrischen Antrieb verstellbar. Aus dieser Zwischenposition (Pos. 1) heraus kann die Trägereinheit 22 translatorisch in die auf der X-Achse liegenden Endpositionen (Pos. 2 und Pos. 3) verfahren werden, wobei hierzu die Verstellmittel eine noch zu erläuternde gekoppelte rotatorische und translatorische Bewegung vollführen.

Der erste Lenker 29 des Parallelogrammlenkermechanismus 28 ist mit einem sich entlang der Z-Achse erstreckenden Führungsbolzen 31 in einer in der X-Y-Ebene liegenden Führungsbahn 32 der Führungskulisse 27 geführt, wobei sowohl der erste Lenker 29 als auch der zweite Lenker 30 um jeweils eine sich entlang der vertikalen Z-Achse erstreckende Drehachse 54, 55 verschwenkbar gelenkig mit einem Verstellschlitten 33 verbunden sind, der entlang einer an dem Auslegerarm 26 gehaltenen Führungsschiene 34 entlang der Y-Achse relativ zu dem Auslegerarm 26 verstellbar ist, wobei die Drehachse 54, um die der erste Lenker 29 verschwenkbar an dem Verstellschlitten 33 angelenkt ist mit Axialabstand zu dem Führungsbolzen 31 angeordnet ist. Dabei ist die gekrümmte Führungsbahn derart ausgeformt, dass die sich ergebende Verstellbewegung der Trägereinheit 22 zwischen den Endpositionen (Pos. 2 und Pos. 3), die aus einer translatorischen Verstellbewegung des Verstellschlittens 33 entlang der Y-Achse und einer gekoppelten rotatorischen Bewegung der Lenker 29, 30 des Parallelogrammlenkermechanismus 28 um zur Z-Achse parallele Drehachsen resultiert, eine rein translatorische Bewegung ist. Bei der Verstellung der Trägereinheit 22 von der Zwischenposition (Pos. 1) in die Endposition (Pos. 2) legt der Verstellschlitten 33 dabei die Strecke a entlang der Y-Achse zurück.

Dem ersten Lenker 29 ist ein elektromotorischer Antrieb 35 zugeordnet, der an dem Verstellschlitten 33 festgelegt ist. Der elektromotorische Antrieb 35 ist über einen Zwischenlenker 36 gelenkig mit dem ersten Lenker 29 verbunden, so dass ein Verschwenken des Zwischenlenkers 36 mittels des elektromotorischen Antriebs 35 ein Verschwenken des ersten Lenkers 29 und damit des zweiten Lenkers 30 und somit eine translatorische Verstellbewegung des Verstellschlittens 33 entlang der Y-Achse zur Folge hat.

Wie aus Fig. 1b zu ersehen ist, ist der Auslegerarm 26 an einer schräg verlaufenden Konsole 37 angeordnet, die wiederum mit einem Schlitten entlang der Y-Achse verstellbar ist.

In den Fig. 1c bis 1f ist die Trägereinheit 22 mit einer als Entnahmeeinheit ausgebildeten Funktionseinheit 23 im Detail gezeigt. Wie insbesondere aus Fig. 1c ersichtlich ist, dient diese Funktionseinheit 23 dazu, ein Spritzgussteil 38, hier einen Eimer, aus einer Teilform 39 zu entformen und von einer ersten Position (Pos. A) in eine zweite, um 90° verschwenkte, Position (Pos. B) kombiniert translatorisch und rotatorisch zu verstellen.

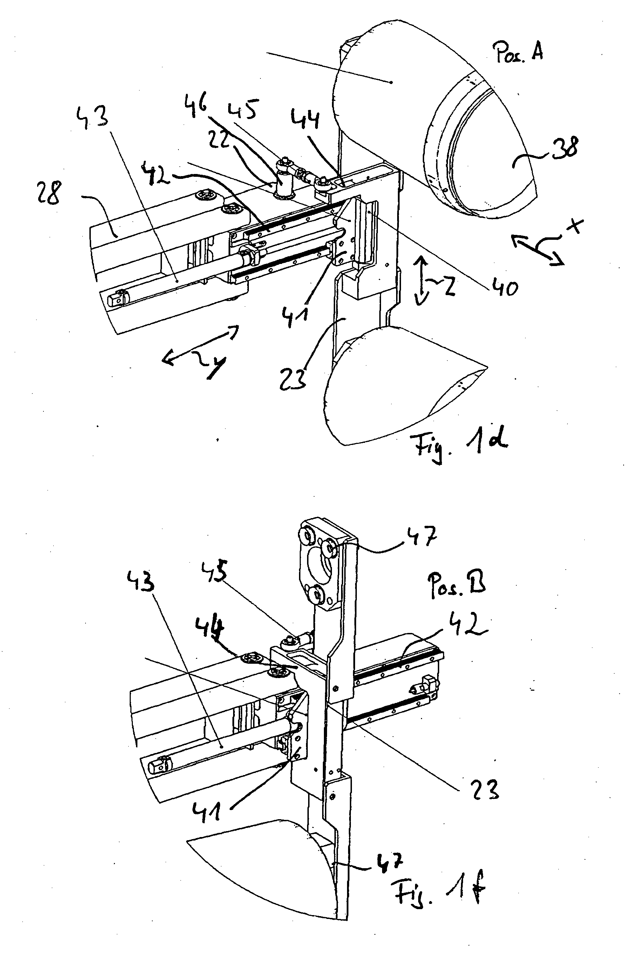

In Fig. 1d ist die Funktionseinheit 23 unmittelbar nach der Entformung eines Spritzgussteils 38 aus der Teilform 39 in der ersten Position (Pos. A) gezeigt. Zu erkennen ist, dass die Funktionseinheit 23 mittels eines Drehgelenks 40, dessen Drehachse sich entlang der Z-Achse erstreckt, verschwenkbar auf einem Schlitten 41 angeordnet ist. Der Schlitten 41 ist entlang einer Führung 42, die an der Trägereinheit 22 gehalten ist, translatorisch entlang der Y-Achse verstellbar. Zum translatorischen Antreiben des Schlittens 41 ist ein als pneumatischer Antrieb 43 ausgebildeter Linearantrieb vorgesehen, der an der Trägereinheit 22 gehalten ist. An einem sich in Fig. 1d entlang der Y-Achse erstreckenden Schenkel 44 der Funktionseinheit 23 ist ein Koppellenker 45 angelenkt, der anderenends gelenkig an einem Drehgelenk 46 drehbar gehalten ist. Das Drehgelenk 46 ist ortsfest an der Trägereinheit 22 angeordnet, wobei sich dessen Drechachse entlang der Z-Achse erstreckt.

Um die Funktionseinheit 23 aus der in Fig. 1 dargestellten ersten Position (Pos. A), in der die Funktionseinheit 23 sich parallel zu einer von der Y-Achse und der Z-Achse gedachten Ebene erstreckt, in die in Fig. 1f dargestellte zweite Position (Pos. B) zu verstellen, wird der Schlitten 41 mittels des pneumatischen Antriebs 43 entlang der Y-Achse verstellt, wodurch die Funktionseinheit 23 sich sowohl translatorisch entlang der Y-Achse bewegt, als auch gleichzeitig rotatorisch um das Drehgelenk 46 verschwenkt wird und zwar zwischen der ersten Position (Pos. A) und der zweiten Position (Pos. B) um 90°. Folglich erstreckt sich der Schenkel 44 in der zweiten Position (Pos. B) entlang der X-Achse. Wie aus Fig. 1f zu ersehen ist, umfasst die Funktionseinheit 23 als Saugnäpfe ausgebildete Saugmittel 47 zum Ansaugen des Spritzgussteils 38. Bei dem gezeigten Ausführungsbeispiel sind zwei entlang der Z-Achse beabstandete Saugmittel 47 zur gleichzeitigen Entnahme von zwei Spritzgussteilen aus jeweils einer von zwei übereinander angeordneten Teilformen vorgesehen.

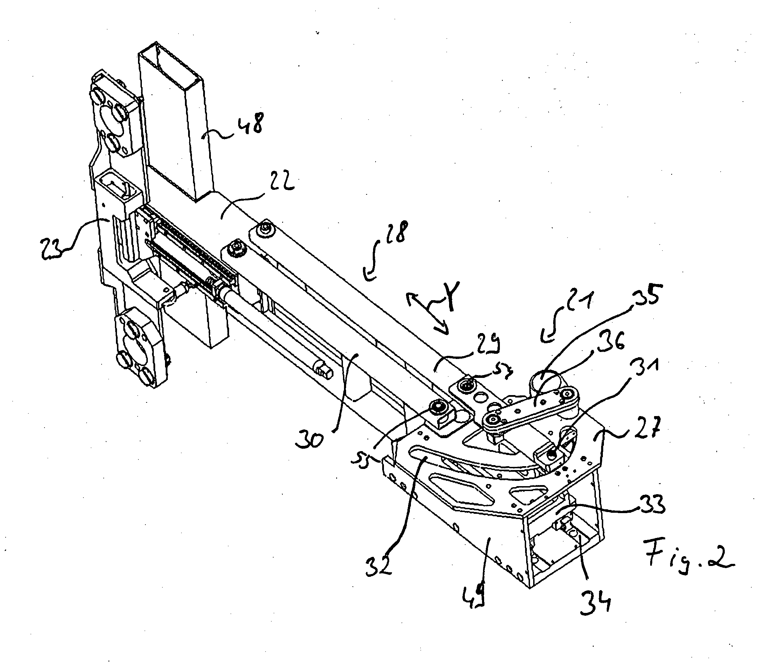

In Fig. 2 ist sowohl das Verstellmittel 21 zum Verstellen der Trägereinheit 22 zwischen den Endpositionen (Pos. 2 und Pos. 3) dargestellt, sowie der Mechanismus zur Realisierung einer gekoppelten rotatorischen und translatorischen Verstellbewegung der als Entnahmeeinheit ausgebildeten Funktionseinheit 23 relativ zu der Trägereinheit 22. Aus Fig. 2 ist ein Ausschnitt der weiteren Funktionseinheit 48 zum Einlegen von Substraten in eine Teilform einer Spritzgussmaschine gezeigt, wobei die Funktionseinheiten 23, 48 auf zwei gegenüberliegenden Seiten der Trägereinheit 22 angeordnet und in einander entgegengesetzte Richtungen ausgerichtet sind.

Aus Fig. 2 ist insbesondere ein Aufsatz 49 zum Festlegen an dem in Fig. 1a gezeigten Auslegerarm 26 gezeigt. Der Aufsatz 29 trägt die Führungsschiene 34 für den Verstellschlitten 33 zur Realisierung der translatorischen Bewegungskomponente entlang der Y-Achse zur Verwirklichung der resultierenden Verstellbewegung der Trägereinheit 22 zwischen den Endpositionen (Pos. 2 und Pos. 3). Ebenso ist deutlich die an dem Aufsatz 49 befestigte Führungskulisse 27 mit ihrer Führungsbahn 32 zu erkennen, in der der Führungsbolzen 31 des ersten Lenkers 29 des Parallelogrammlenkermechanismus 28 geführt ist. Weiterhin wird die gelenkige Anbindung des ersten Lenkers 29 über den Zwischenlenker 36 an dem elektromotorischen Antrieb 35 deutlich, welcher an dem Verstellschlitten 33 festgelegt ist. Theoretisch ist es denkbar, auf den Aufsatz 49 zu verzichten und die Bauteile unmittelbar an dem Auslegerarm 26 zu befestigen, was im Rahmen der Erfindung liegt.

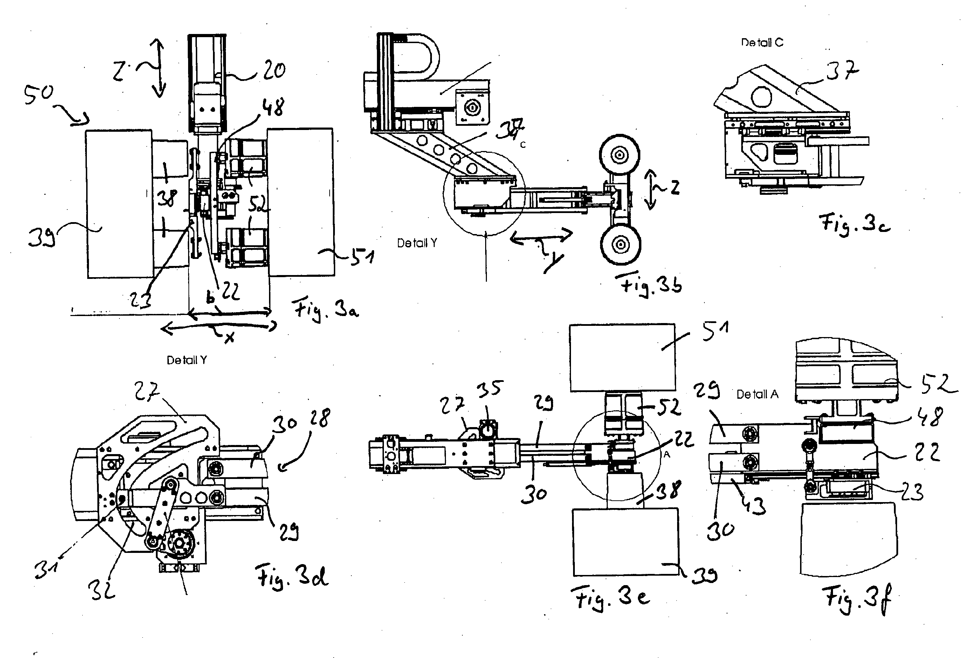

Im Folgenden werden anhand der Fig. 3a bis 7f die Arbeitsschritte der Handhabungseinrichtung 20 im Kontext einer Spritzgussvorrichtung 50 erläutert.

Die Spritzgussvorrichtung 50 umfasst die Teilform 39 sowie eine weitere Teilform 51, wobei die beiden Teilformen 39, 51 relativ zueinander entlang der X-Achse translatorisch verstellbar sind. Bei der Teilform 39 handelt es sich um ein positives Formteil zum Spritzen eines Eimers und bei der weiteren Teilform 51 um den zugehörigen negativen Teil der Spritzgussform zur Herstellung von Eimern. In den Fig. 3a, 4a, 5a, 6a, 7a ist dabei jeweils eine Ansicht der Spritzgussvorrichtung 50 mit Handhabungsvorrichtung 20 von oben gezeigt. In den Fig. 3b, 4b, 5b, 6b, 7b ist die Handhabungseinrichtung in einer Seitenansicht dargestellt. In den Fig. 3c, 4c, 5c, 6c, 7c ist ein Detail C aus Fig. 3b bzw. Fig. 4b, 5b, 6b, 7b in einer Seitenansicht vergrößert dargestellt. In den Fig. 3d, 4d, 5d, 6d, 7d ist ein Detail Y aus Fig. 3b bzw. Fig. 4b, 5b, 6b, 7b in einer Ansicht von unten gezeigt. In den Fig. 3e, 4e, 5e, 6e, 7e ist die Spritzgussvorrichtung 50 in einer Ansicht von oben dargestellt. In den Fig. 3f, 4f, 5f, 6f, 7f ist ein Detail A aus den entsprechenden Fig. 3e, 4e, 5e, 6e, 7e gezeigt.

In den Fig. 3a bis 3f ist die Position der Handhabungseinrichtung 20 unmittelbar nach dem Einfahren entlang der Y-Achse in einen Bereich zwischen den auseinander gefahrenen Teilformen 39, 51 gezeigt. Die Trägereinheit 22 trägt, wie aus Fig. 3a zu ersehen ist, in der linken Zeichnungshälfte die Funktionseinheit 23 zum Entnehmen fertiger Spritzgussteile 38 aus der Teilform 39. Gegenüberliegend trägt die Trägereinheit 22 die Funktionseinheit 48 zum Einlegen von am Umfang von eimerförmigen Fortsätzen 52 durch Ansaugen gehaltenen Substraten (Etiketten). Zu ersehen ist, dass der Abstand B, gemessen entlang der X-Achse, zwischen den Teilformen 39 und 51 lediglich geringfügig größer ist als die Erstreckung der Handhabungseinrichtung 20 im Bereich der Trägereinheit 22 entlang der X-Achse. Dies macht ein später noch zu erläuterndes Verschwenken der Funktionseinheit 23 mit den Spritzgussteilen 38 und eine gleichzeitige translatorische Verstellung entlang der Y-Achse relativ zu der Trägereinheit 22 notwendig. Wie aus den Fig. 3d bis 3f zu erkennen ist, fluchten die Lenker 29, 30 des Parallelogrammlenkermechanismus 28 in dieser in Fig. 1 als Zwischenposition (Pos. 1) gekennzeichneten Position mit dem Auslegerarm 26. Dieser ist zusammen mit der Strebe 37 entlang der Y-Achse verstellbar.

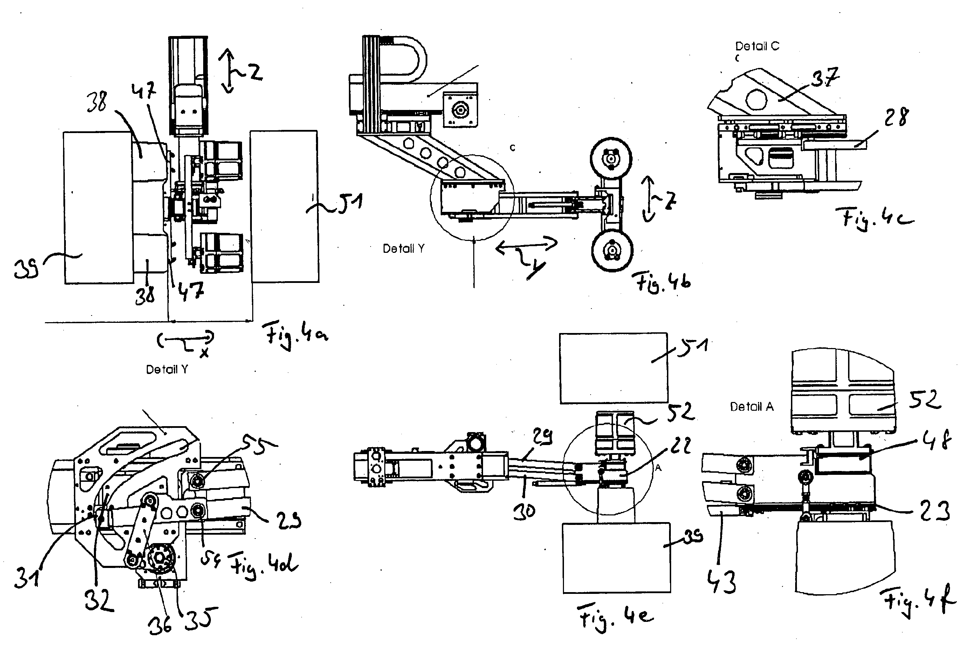

In den Fig. 4a bis Fig. 4f ist der Entformvorgang von Spritzgussteilen 38 aus den Teilformen 39 gezeigt. Hierzu wurde die Trägereinheit 22 in einer reinen translatorischen Bewegung (resultierend aus einer gekoppelten rotatorischen und translatorischen Bewegung der Verstellmittel) entlang der X-Achse verstellt, so dass die Saugmittel 47 der Funktionseinheit 23 die Spritzgussteile 38 kontaktieren und ansaugen können.

Wie insbesondere aus Fig. 4d ersichtlich ist, hat sich hierzu der erste Lenker 29 mit seinem Führungsbolzen 31 in der Führungsbahn 32 in der Zeichnungsebene, angetrieben durch den elektromotorischen Antrieb 35 und die Kopplung mittels des Zwischenlenkers 36, in der Zeichnungsebene nach unten bewegt. In dieser Endposition ist die Führungseinheit 23 noch parallel zu der von der Y- und der Z-Achse aufgespannten Ebene ausgerichtet.

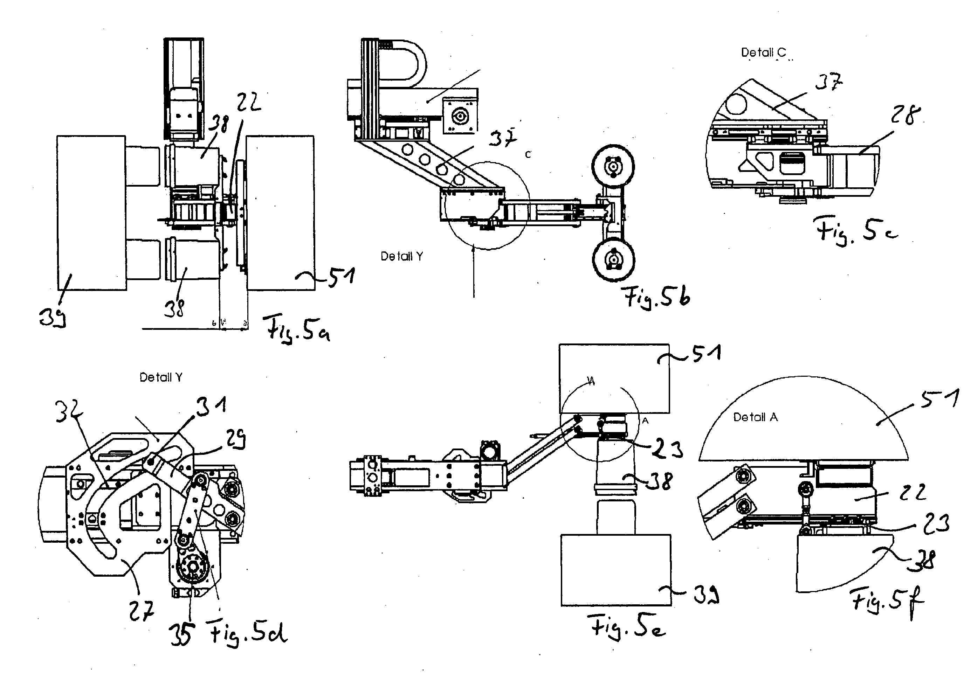

Daraufhin wird die Trägereinheit 22 mit ihren Funktionseinheiten 23 und 48 in die in den Fig. 5a bis 5f gezeigte Endposition verfahren, so dass die Fortsätze 52 mit den als Etiketten ausgebildeten Substraten in die Teilform 51 versenkt werden, wo die Substrate abgelegt werden, um im späteren Spritzgussverfahren an dem entstehenden Behältnis festgelegt zu werden (IML-Fertigungstechnik).

Wie aus Fig. 5d zu erkennen ist, wurde hierzu der erste Lenker 29 mit seinem Führungsbolzen 31 in der Führungsbahn 32 der Führungskulisse 27 in der Zeichnungsebene nach oben verstellt. Wie aus den Fig. 5e und 5f zu erkennen ist, ist in dieser Position die als Entnahmeeinheit ausgebildete Funktionseinheit 23 mit den angesaugten Spritzgussteilen 38 immer noch in Richtung der Teilform 39 ausgerichtet.

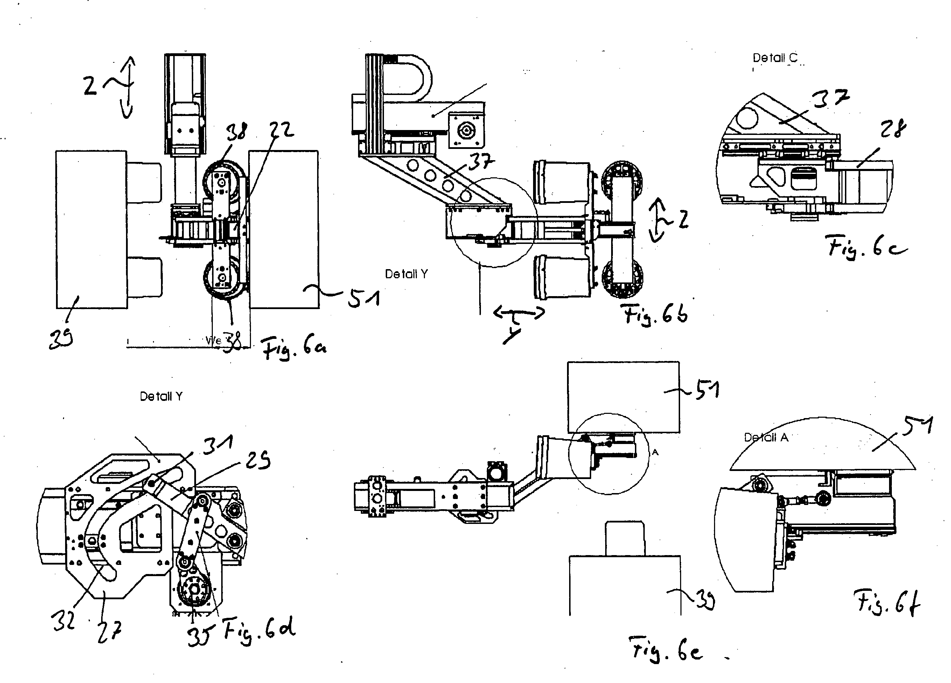

In der in den Fig. 6a bis 6f gezeigten Position befinden sich die Fortsätze 52 noch innerhalb der Teilform 51. Um ein späteres Verfahren der Trägereinheit 23 mit den Funktionseinheiten 23 und 48, insbesondere mit daran aufgenommenen Spritzgussteilen 38, entlang der Y-Achse aus dem Bereich zwischen den Teilformen 39, 51 heraus zu ermöglichen, ohne dass die Spritzgussformen 38 an der positiven Teilform 39 hängen bleiben, wurde die Funktionseinheit 23 um 90°, wie im Detail in den Fig. 1d und 1f gezeigt und beschrieben, relativ zu der Trägereinheit 22 verschwenkt und gleichzeitig translatorisch verstellt. Da die Spritzgussteile 38 in der Teilform 39 eine größere Erstreckung entlang der X-Achse als entlang der Y-Achse haben, weisen die Spritzgussteile nach deren Verschwenken um 90° eine geringere Erstreckung entlang der X-Achse auf, wodurch ein Herausverstellen der Fortsätze 52 aus der Teilform 51 mitsamt der Trägereinheit 22 entlang der X-Achse möglich ist, ohne dass die Spritzgussteile 38 wieder auf die positive Teilform 39 aufgeschoben werden, wodurch in der Folge ungehindertes Verstellen der Trägereinheit 22 mit ihren Funktionseinheiten 23 und 48 entlang der Y-Achse aus dem Bereich zwischen den Teilformen 39, 51 heraus möglich wird. Die translatorische Bewegungskomponente erhöht dabei die resultierende Bewegungsfreiheit der Trägereinheit 22 entlang der X-Achse.

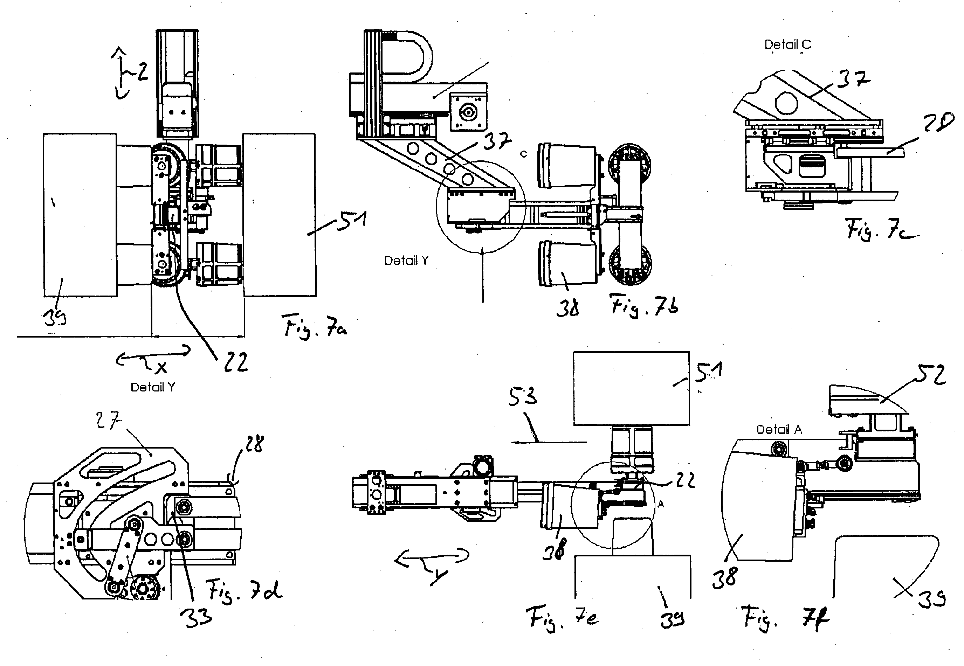

Nach dem Verschwenken der Funktionseinheit 23 mit den Spritzgussteilen 38 um 90° sowie deren translatorischem Verstellen wird die Trägereinheit 22 in die ursprüngliche, in Fig. 1 als Zwischenposition (Pos. 1) bezeichnete Position in einer seine translatorischen Bewegung entlang der X-Achse verstellt. Diese reine translatorische Bewegung wird mittels des in Fig. 7d ausschnittsweise gezeigten Parallelogrammlenkermechanismus 28, der Führungskulisse 27 und dem Verstellschlitten 33 ermöglicht. In dieser Zwischenposition (Pos. 1), in der Spritzgussteile 38 bereits aus dem Bereich zwischen den Spritzgussformen herausbewegt sind (kombinierte rotatorische und translatorische Bewegung) kann die Trägereinheit 22 ungehindert entlang der Y-Achse in Pfeilrichtung 53 bewegt werden.

## Patentansprüche

1. Handhabungseinrichtung, zum Einsatz in einer Spritzgussvorrichtung zum Herstellen von Spritzgussteilen (38), vorzugsweise zum Herstellen von Kunststoffbehältern, umfassend eine Trägereinheit (22), die zwischen zwei entlang einer X-Achse relativ zueinander verstellbaren Teilformen (39, 51) einer mehrteiligen Spritzgussform, zwischen einer ersten und einer zweiten jeweils auf der X-Achse liegenden Endposition (Pos. 2, Pos. 3) sowie quer zur X-Achse entlang einer Y-Achse mit Hilfe von Verstellmitteln (21) verstellbar ist, wobei
die Verstellmittel (21) derart ausgebildet sind, dass die Verstellbewegung der Trägereinheit (22) zwischen den beiden Endpositionen (Pos. 2, Pos. 3) aus einer kombinierten rotatorischen und translatorischen Bewegungskomponente resultiert, und wobei
die aus der rotatorischen und translatorischen Bewegungskomponente der Trägereinheit (22) resultierende Verstellbewegung der Trägereinheit (22) zwischen den Endpositionen (Pos. 2, Pos. 3) eine rein translatorische Bewegung ist, und wobei
die Trägereinheit (22) eine in einer Ebene liegende Aufnahmefläche (24, 25) bereitstellt, die in den Endpositionen (Pos. 2, Pos. 3) in sich parallel ist und auch während der Verstellbewegung zwischen den Endpositionen (Pos. 2, Pos. 3) in sich parallel bleibt, und wobei die Verstellmittel (21) eine Führungskulisse (27) umfassen,
**dadurch gekennzeichnet, dass**
die Verstellmittel (21) einen Parallelogrammlenkermechanismus (28) umfassen, und dass ein erster Lenker (29) und ein zweiter Lenker (30) des Parallelogrammlenkermechanismus (28) an einem entlang der Y-Achse verstellbaren Verstellschlitten (33) angelenkt sind und der erste Lenker (29) in der Führungskulisse (27) geführt ist.

2. Handhabungseinrichtung nach Anspruch 1,
**dadurch gekennzeichnet,**
**dass** die Führungskulisse (27) an einem, vorzugsweise entlang der Y-Achse verstellbaren, Auslegerarm (26) fixiert ist, relativ zu dem der an dem Auslegerarm (26) geführte Verstellschlitten (33) entlang der Y-Achse verstellbar ist.

3. Handhabungseinrichtung nach einem der Ansprüche 1 oder 2,
**dadurch gekennzeichnet,**
**dass** ein elektromotorischer Antrieb (35) zum Verschwenken des Parallelogrammlenkermechanismus (28) und zum gekoppelten Verstellen des Verstellschlittens (33) entlang der Y-Achse vorgesehen ist.

4. Handhabungseinrichtung nach einem der vorhergehenden Ansprüche,
**dadurch gekennzeichnet,**
**dass** die Trägereinheit (22) eine Funktionseinheit (23, 48) trägt, wobei die Funktionseinheit (23, 48) relativ zu der Trägereinheit (22) verschwenkbar angetrieben ist.

5. Handhabungseinrichtung nach Anspruch 4,
**dadurch gekennzeichnet,**
**dass** die Funktionseinheit (23, 48) um 90° verschwenkbar ist.

6. Handhabungseinrichtung nach einem der Ansprüche 4 oder 5,
**dadurch gekennzeichnet,**
**dass** die Funktionseinheit (23, 48) um eine senkrecht zur X-Achse sowie senkrecht zur Y-Achse verlaufende vertikale Z-Achse relativ zu der Trägereinheit (22) verschwenkbar ist.

7. Handhabungseinrichtung nach einem der Ansprüche 4 bis 6,
**dadurch gekennzeichnet,**
**dass** die Funktionseinheit (23, 48) zwischen einer ersten Position (Pos. A) und einer zweiten Position (Pos. B) in einer kombinierten rotatorischen und translatorischen Bewegung verstellbar ist.

8. Handhabungseinrichtung nach einem der Ansprüche 4 bis 7,
**dadurch gekennzeichnet,**
**dass** die Funktionseinheit (23, 48) verschwenkbar auf einem an der Trägereinheit (22) angeordneten Schlitten (41) angeordnet ist.

9. Handhabungseinrichtung nach Anspruch 8,
**dadurch gekennzeichnet,**
**dass** die Funktionseinheit (23, 48) oder der Schlitten (41) gelenkig mit einem an der Trägereinheit (22) angelenkten Koppellenker (45) verbunden ist, derart, dass aus einer translatorischen Verstellbewegung des Schlittens (41), insbesondere entlang der Y-Achse, die Verschwenkbewegung der Funktionseinheit (23, 48) relativ zu der Trägereinheit (22) resultiert.

10. Spritzgussvorrichtung zum Herstellen von Spritzgussteilen (38), insbesondere zum Herstellen von Kunststoffbehältern, mit einer mehrteiligen Spritzgussform, umfassend eine erste und eine zweite Teilform (39, 51), die relativ zueinander entlang einer X-Achse translatorisch verstellbar sind, und mit einer Handhabungseinrichtung (20) nach einem der vorhergehenden Ansprüche.

11. Spritzgussvorrichtung (50) nach Anspruch 10,
**dadurch gekennzeichnet,**
**dass** die erste Teilform (39) ortsfest und die zweite Teilform (51) zusammen mit dem hergestellten Spritzgussteil (38) verstellbar angeordnet ist, oder umgekehrt.

## Claims

1. A handling device for use in an injection moulding machine for manufacturing injection-moulded parts (38), preferably for manufacturing plastic containers, comprising a carrier unit (22) that can be adjusted between two partial moulds (39, 51) of a composite injection mould that can be adjusted relative to one another along a X-axis, between a first and a second end position (Pos. 2, Pos. 3) that respectively lie on the X-axis, as well as transverse to the X-axis along a Y-axis, with the aid of adjusting means (21), wherein
the adjusting means (21) are realized in such a way that the adjusting motion of the carrier unit (22) between the two end positions (Pos. 2, Pos. 3) results from a combined rotatory and translatory motional component, wherein
the adjusting motion of the carrier unit (22) between the end positions (Pos. 2, Pos. 3) resulting from the rotatory and translatory motional component of the carrier unit (22) is a purely translatory motion, wherein
the carrier unit (22) provides a receptacle surface (24, 25) that lies in a plane, with said receptacle surface being parallel in itself in the end positions (Pos. 2, Pos. 3) and preferably also remaining parallel in itself during the adjusting motion between the end positions (Pos. 2, Pos. 3), and wherein the adjusting means (21) comprise a control link (27),
**characterized in that**
the adjusting means (21) comprise a parallelogram control arm mechanism (28), and **in that** a first control arm (29) and a second control arm (30) of the parallelogram control arm mechanism (28) are coupled to an adjusting carriage (33) that can be adjusted along the Y-axis and the first control arm (29) is guided in the control link (27).

2. The handling device according to Claim 1, **characterized in that** the control link (27) is fixed on a cantilever arm (26) that preferably can be adjusted along the Y-axis and relative to which the adjusting carriage (33) guided on the cantilever arm (26) can be adjusted along the Y-axis.

3. The handling device according to Claim 1 or 2, **characterized in that** an electric motor drive (35) is provided for pivoting the parallelogram control arm mechanism (28) and for the coupled adjustment of the adjusting carriage (33) along the Y-axis.

4. The handling device according to one of the preceding claims, **characterized in that** carrier unit (22) carries a functional unit (23, 48), wherein the functional unit (23, 48) is pivotably driven relative to the carrier unit (22).

5. The handling device according to Claim 4, **characterized in that** the functional unit (23, 48) can be pivoted by 90°.

6. The handling device according to Claim 4 or 5, **characterized in that** the functional unit (23, 48) can be pivoted relative to the carrier unit (22) about a vertical Z-axis that extends perpendicular to the X-axis, as well as perpendicular to the Y-axis.

7. The handling device according to one of Claims 4 to 6, **characterized in that** the functional unit (23, 48) can be adjusted between a first position (Pos. A) and a second position (Pos. B) in the form of a combined rotatory and translatory motion.

8. The handling device according to one of Claims 4 to 7, **characterized in that** the functional unit (23, 48) is pivotably arranged on a carriage (41) that is arranged on the carrier unit (22).

9. The handling device according to Claim 8, **characterized in that** the functional unit (23, 48) or the carriage (41) is connected in an articulated fashion to a control arm coupling (45) that is coupled to the carrier unit (22), namely such that the pivoting motion of the functional unit (23, 48) relative to the carrier unit (22) results from a translatory adjusting motion of the carriage (41), particularly along the Y-axis.

10. An injection moulding machine for manufacturing injection-moulded parts (38), particularly for manufacturing plastic containers, with a composite injection mould comprising a first and a second partial mould (39, 51) that can be adjusted relative to one another in a translatory fashion along a X-axis, and with a handling device (20) according to one of the preceding claims.

11. The injection moulding machine (50) according to Claim 10, **characterized in that** the first partial mould (39) is arranged stationarily and the second partial mould (51) is arranged such that it can be adjusted together with the injectionmoulded part (38) being manufactured or vise versa.

## Revendications

1. Dispositif de manipulation, à utiliser dans un dispositif de moulage par injection pour produire des pièces moulées par injection (38), de préférence pour produire des réservoirs en matière plastique, comprenant une unité de support (22), qui est déplaçable entre deux moules partiels (39, 51) d'un moule à injection en plusieurs parties déplaçables l'un par rapport à l'autre le long d'un axe X, entre une première et une deuxième positions d'extrémité (Pos. 2, Pos. 3) situées respectivement sur l'axe X, ainsi que transversalement à l'axe X le long d'un axe Y à l'aide de moyens de déplacement (21), et les moyens de déplacement (21) sont réalisés de telle manière que le mouvement de déplacement de l'unité de support (22) entre les deux positions d'extrémité (Pos. 2, Pos. 3) résulte d'une composante combinée de mouvement de rotation et de translation et l'unité de support (22) procure une face de réception (24, 25) située dans un plan, qui est parallèle à elle-même dans les positions d'extrémité (Pos. 2, Pos. 3) et qui reste de préférence aussi parallèle à elle-même pendant le mouvement de déplacement entre les positions d'extrémité (Pos. 2, Pos. 3) et les moyens de déplacement (21) comprennent une coulisse de guidage (27)**caractérisé en ce que** les moyens de déplacement (21) comprennent un mécanisme de parallélogramme articulé (28) et une première bielle (29) et une deuxième bielle (30) du mécanisme de parallélogramme articulé (28) sont articulées sur un chariot mobile (33) déplaçable le long de l'axe Y et la première bielle (29) est guidée dans la coulisse de guidage (27).

2. Dispositif de manipulation selon la revendication 1, **caractérisé en ce que** la coulisse de guidage (27) est fixée à un bras (26), de préférence déplaçable le long de l'axe Y, par rapport auquel le chariot mobile (33) guidé sur le bras (26) est déplaçable le long de l'axe Y.

3. Dispositif de manipulation selon l'une des revendications 1 ou 2, **caractérisé en ce qu'**il est prévu un entraînement par moteur électrique (35) pour le pivotement du mécanisme de parallélogramme articulé (28) et pour le déplacement couplé du chariot mobile (33) le long de l'axe Y.

4. Dispositif de manipulation selon une des revendications précédentes **caractérisé en ce que** l'unité de support (22) porte une unité fonctionnelle (23, 48). L'unité fonctionnelle (23, 48) étant entraînée de façon pivotante par rapport à l'unité de support (22).

5. Dispositif de manipulation selon la revendication 4, **caractérisé en ce que** l'unité fonctionnelle (23, 48) peut pivoter de 90°.

6. Dispositif de manipulation selon l'une des revendications 4 ou 5, **caractérisé en ce que** l'unité fonctionnelle (23, 48) peut pivoter par rapport à l'unité de support (22) autour d'un axe vertical Z s'étendant perpendiculairement à l'axe X ainsi que perpendiculairement à l'axe Y.

7. Dispositif de manipulation selon l'une quelconque des revendications 4 à 6, **caractérisé en ce que** l'unité fonctionnelle (23, 48) est déplaçable entre une première position (Pos. A) et une deuxième position (Pos. B) en un mouvement combiné de rotation et de translation.

8. Dispositif de manipulation selon l'une quelconque des revendications 4 à 7, **caractérisé en ce que** l'unité fonctionnelle (23, 48) est disposée de façon pivotante sur un chariot (41) disposé sur l'unité de support (22).

9. Dispositif de manipulation selon la revendication 8, **caractérisé en ce que** l'unité fonctionnelle (23, 48) ou le chariot (41) est relié(e) de façon articulée à une bielle de couplage (45) articulée sur l'unité de support (22), de telle manière que le mouvement de pivotement de l'unité fonctionnelle (23, 48) par rapport à l'unité de support (22) résulte d'un mouvement de déplacement en translation du chariot (41), en particulier le long de l'axe Y.

10. Dispositif de moulage par injection pour produire des pièces moulées par injection (38), en particulier pour produire des réservoirs en matière plastique, avec un moule à injection en plusieurs parties, comprenant un premier et un deuxième moules partiels (39, 51), qui sont déplaçables en translation l'un par rapport à l'autre le long d'un axe X, et avec un dispositif de manipulation (20) selon l'une quelconque des revendications précédentes.

11. Dispositif de moulage par injection (50) selon la revendication 10, **caractérisé en ce que** le premier moule partiel (39) est stationnaire et le deuxième moule partiel (51) est disposé de façon déplaçable avec la pièce moulée par injection produite (38), ou inversement.
